# EUROPÄISCHE PATENTSCHRIFT

(11) **EP 2 502 723 B1**
(45) Veröffentlichungstag und Bekanntmachung des Hinweises auf die Patenterteilung: **15.01.2020**
(21) Anmeldenummer: 11002290.2
(22) Anmeldetag: 21.03.2011
(51) Int. Cl.: B29C 45/16, B29C 37/00, B29C 43/18, B29C 70/78

(54) **Verfahren zur Herstellung von faserverstärkten, Anbauelemente umfassenden Innenverkleidungsbauteilen für Kraftfahrzeuge**
Method for manufacturing fibre-reinforced internal cladding components comprising attachment elements for motor vehicles
Procédé de fabrication de composants de revêtement interne comprenant des éléments de montage renforcés en fibres pour véhicules automobiles

(43) Veröffentlichungstag der Anmeldung: 26.09.2012
(73) Patentinhaber: SMP Deutschland GmbH, 79268 Bötzingen (DE)
(72) Erfinder: Luesebrink, Uwe, 79100 Freiburg (DE); Pignard, Pierre, 68320 Jebsheim (FR)
(74) Vertreter: Westphal, Mussgnug & Partner Patentanwälte mbB

(56) Entgegenhaltungen:
- EP-A1- 0 543 085
- EP-A2- 0 730 947
- WO-A1-2007/000174
- DE-A1- 19 704 383
- DE-A1- 19 836 313
- DE-A1-102004 054 228
- DE-C1- 10 124 122
- BURKLE E ET AL: "VERBUNDBAUTEILE MIT MEHRPROZESSANLAGEN WIRTSCHAFTLICH HERSTELLEN", KUNSTOFFE INTERNATIONAL, CARL HANSER VERLAG, MUNCHEN, DE, Bd. 81, Nr. 3, 1. März 1991 (1991-03-01), Seiten 192-198, XP000287480, ISSN: 0023-5563

## Beschreibung

Die vorliegende Erfindung betrifft ein Verfahren zur Herstellung von faserverstärkten, Anbauelemente umfassenden Innenverkleidungsbauteilen für Kraftfahrzeuge mit den Merkmalen des Oberbegriffs des Anspruchs 1.

Innenverkleidungsbauteile für Kraftfahrzeuge bestehen meist aus Kunststoffen oder verpressbaren und verformbaren Faserverbundmatten, insbesondere Naturfasermatten. In diesem Zusammenhang werden auch Kombinationen von Naturfasern und künstlichen Fasern, wie z.B. Polypropylenfasern, eingesetzt.

Es ist auch bekannt, Formteile aus Faserplatten oder Fasermatten mit anderen Anbauteilen (Funktionsteilen) zu verbinden.

So beschreibt die DE 102 2004 054 228 A1 ein Verfahren und eine Vorrichtung zur Herstellung eines Verbundteils, wobei ein Naturfaser aufweisendes Formteil mit einem aus einem Kunststoff bestehenden Funktionsteil verbunden wird. Dabei wird zunächst aus dem eine Naturfaser aufweisenden Rohling in einem Pressverfahren ein Formteil gebildet und anschließend wird das Funktionsteil durch Anspritzen einer Kunststoffschmelze an das Formteil angeformt. Die Prägeflächen der Formelemente sind so ausgebildet, dass im Formteil eine Kavität ausgebildet wird, in die dann eine Kunststoffschmelze eingespritzt wird, welche nach dem Abkühlen das an das Formteil angeformte Funktionsteil ausbildet.

Die EP 0 730 947 A2 beschreibt Verkleidungsteile aus Faserverbundmatten, wobei eine erwärmte Faserverbundmatte gemeinsam mit einem die Sichtseite darstellenden Dekormaterial durch Verpressen zu einem Verkleidungsteil verformt werden. Auf der Rückseite des Verkleidungsteiles vorgesehene Anbauelemente, wie z.B. Versteifungsrippen, Befestigungselemente, Halterungen etc., können im gleichen Werkzeug durch Hinterspritzen oder Hinterpressen mit thermoplastisch verarbeitbaren Kunststoffen angeformt werden.

In der DE 198 36 313 A1 wird ein Verfahren zur Herstellung eines Innenverkleidungsbauteils für Kraftfahrzeuge aus Naturfaser und einem thermoplastischen Kunststoff offenbart. Dabei wird die Naturfaserverbundmatte durch Erhitzen und Pressen in einem Presswerkzeug zu einem Formteil geformt. Bei dem Verpressen der Faserverbundmatte zum Formteil werden zuvor in einem getrennten Verfahren hergestellte Anbauelemente mit in das Presswerkzeug eingelegt und während des Pressvorgangs mit der Faserverbundmatte verpresst.

Die EP 0 543 085 A1 zeigt eine Vorrichtung, mit welcher ein Tiefzieh- und ein Spritzgussvorgang kombiniert ausgeführt werden können. Beim Herstellungsprozess des Formteils wirken zwei unterschiedliche Oberwerkzeuge mit demselben Unterwerkzeug zusammen.

Das zuletzt geschilderte Verfahren hat den Nachteil, dass zwei Verfahrensschritte in zwei unterschiedlichen Werkzeugen durchgeführt werden müssen, um zu dem gewünschten Bauteil zu kommen, was verfahrenstechnische und logistische Nachteile mit sich bringt.

Die vorhergenannten Verfahren, bei denen die in einem Presswerkzeug geformten Formteile anschließend hinterspritzt werden, haben den Nachteil, dass bei diesem Prozess hohe Drücke und Temperaturen auf den Materialverbund wirken, was zu unerwünschten Effekten, wie z.B. Auffaltungen oder Verziehen des Materialverbundes, führen kann. Dies tritt insbesondere dann auf, wenn großflächige Bereiche oder lange Anbauelemente, wie z.B. Verstärkungsrippen, hinterspritzt werden.

Aufgabe der vorliegenden Erfindung ist es daher, ein Verfahren anzubieten, dass die Nachteile des Standes der Technik nicht aufweist.

Gelöst wird diese Aufgabe durch ein Verfahren mit den Merkmalen des Anspruchs 1. Weiterentwicklungen und vorteilhafte Ausgestaltungen des erfindungsgemäßen Verfahrens sind Gegenstand der entsprechenden Unteransprüche.

Bei dem erfindungsgemäßen Verfahren zur Herstellung von faserverstärkten, Anbauelemente umfassenden Innenverkleidungsbauteilen für Kraftfahrzeuge werden in einem ersten Schritt die Anbauelemente in einem einen Kern und eine erste Matrize umfassenden Werkzeug unter Verwendung eines thermoplastischen oder duroplastischen Kunststoffs gespritzt. In einem zweiten Schritt wird das Werkzeug geöffnet, wobei die gespritzten Formteile im Kern in Position bleiben. Anschließend wird in einem dritten Schritt die Fasermatte in das Werkzeug eingelegt und es wird eine zweite Matrize in Position gebracht. In einem vierten Schritt wird das Werkzeug nun mit der zweiten Matrize wieder geschlossen und die Fasermatte wird zusammen mit den noch im Kern befindlichen gespritzten Formteilen verpresst. Dieser Schritt wird vorzugsweise bei Temperaturen zwischen 100°C und 230°C durchgeführt. Im letzten Schritt wird dann das Formwerkzeug wieder geöffnet und das fertige Bauteil wird entformt.

Das erfindungsgemäße Verfahren kann vorteilhaft für Innenverkleidungsbauteile mit Anbauelementen, wie z.B. Funktionselementen, Funktionsbereiche und/oder Verstärkungen, durchgeführt werden.

Um eine optimale Verbindung zwischen der Fasermatte und den Anbauelementen zur erreichen, ist es vorteilhaft, wenn die Anbauelemente vor dem Überpressen mit der Fasermatte zumindest teilweise erstarren, wobei das Überpressen jedoch vor dem vollständigen Erstarren der Anbauelemente erfolgen sollte. Auf diese Weise kann eine optimale Anbindung der Anbauelemente an die Fasermatte erreicht werden, ohne dass es zu den bekannten Nachteilen des Verziehens oder Auffaltens der Fasermatte kommt.

Zur Verbesserung der Verbindungsbildung der Anbauelemente mit der Fasermatte kann es vorteilhaft sein, wenn die Anbauelemente mit einer Haltemittel umfassenden Funktionsoberfläche gefertigt werden und beispielsweise Rillen oder Noppen aufweisen, die bei der Verbindungsbildung mit der Fasermatte quasi als Verankerung fungieren.

Eine weitere vorteilhafte Ausgestaltung des erfindungsgemäßen Verfahrens besteht darin, dass das kombinierte Spritz- und Presswerkzeug mindestens einen Kernschieber umfasst, mit dessen Hilfe ausgesuchte Bereiche des Werkzeugkerns bzw. der Kavität im Werkzeugkern abgedeckt werden können und damit für die Kunststoffschmelze unzugänglich sind.

Eine Vorrichtung zur Herstellung von faserverstärkten, Anbauelemente umfassenden Innenverkleidungsbauteilen für Kraftfahrzeugeist ein kombiniertes Spritz- und Presswerkzeug mit einem Werkzeugkern, Düsen und Auswerfern sowie einer ersten Matrize für das Spritzen von Anbauelementen aus einem thermoplastischen oder duroplastischen Kunststoff und einer zweiten Matrize zum Überpressen der gespritzten Anbauelemente mit einer Fasermatte.

Eine Ausgestaltung der Vorrichtung sieht vor, dass die Vorrichtung mindestens einen Kernschieber umfasst.

Das erfindungsgemäße Verfahren ist sowohl für thermoplastische als auch für duroplastische Materialkombinationen anwendbar sowie für alle bekannten Fasermatten.

In Folgenden wird die Erfindung anhand von Figuren ausführlich erläutert.

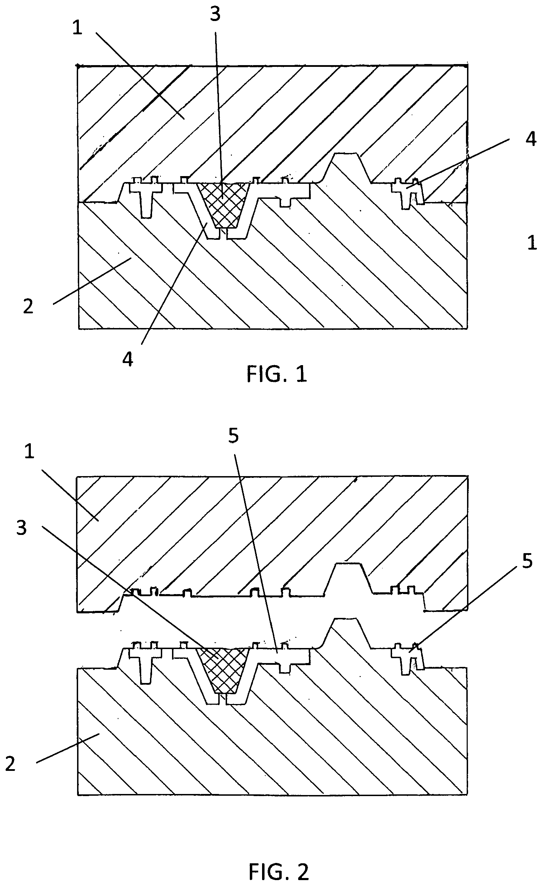

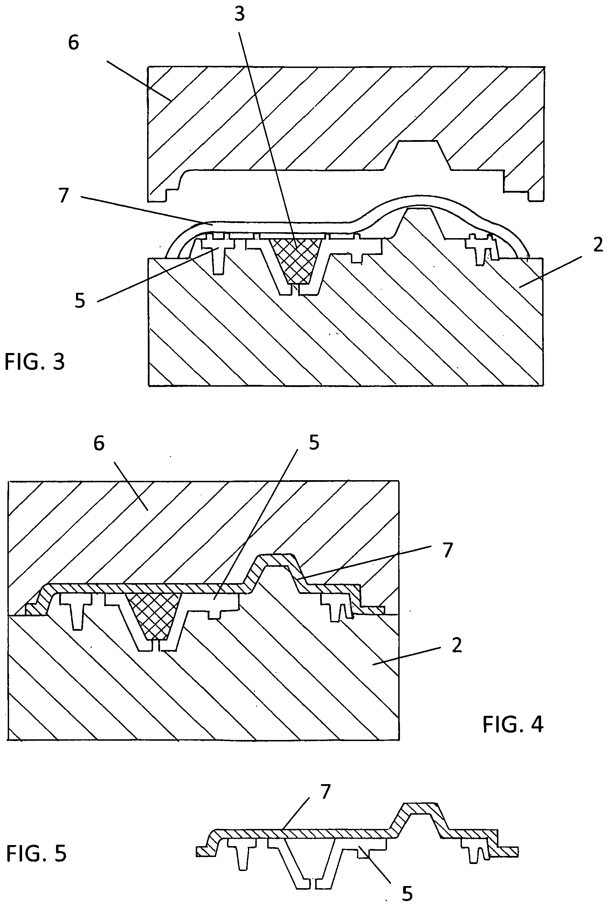

Dabei zeigen die Figuren 1 bis 4 jeweils Schnittdarstellungen des kombinierten Spritz- und Presswerkzeugs zu unterschiedlichen Verfahrenszeitpunkten. Die Figur 5 zeigt ein Schnitt durch ein Innenverkleidungsbauteil.

In der Figur 1 ist ein Schnittbild eines Ausschnittes aus einem kombinierten Spritz- und Presswerkzeug mit einer Matrize 1, einem Kern 2 und einem Kernschieber 3 zu sehen. Das kombinierte Spritz- und Presswerkzeug ist geschlossen und die für die gespritzten Formteile vorgesehenen Kavitäten 4 im Kern 2 sind bereits mit einer Kunststoffmasse 5 gefüllt. Die Funktionsfläche 9 umfasst Noppen 8 als Haltemittel, die bei der Verbindungsbildung mit der Fasermatte als Verankerung fungieren.

Die Figur 2 zeigt den zweiten Verfahrensschritt mit einem geöffneten kombinierten Spritz- und Presswerkzeug, wobei die gespritzten Formteile 6 sowie der Kernschieber 3 ihre Position im Kern behalten, während die Matrize 1 vom Kern 2 entfernt wird.

In der Figur 3 ist der dritte Verfahrensschritt wiedergegeben, wobei nun die erste Matrize 1 durch die zweite Matrize 6 ersetzt und die Fasermatte 7 in das Presswerkzeug eingelegt ist.

Die Figur 4 zeigt das mit Matrize 2 geschlossene Formwerkzeug zum Zeitpunkt des Pressens.

In der Figur 5 ist das fertige Innenverkleidungsbauteil mit der gepressten Fasermatte 7 und den angeformten Funktionselementen 5 nach dem Entformen zu sehen.

### Bezugszeichenliste

- 1: erste Matrize
- 2: Kern
- 3: Kernschieber
- 4: Kavität
- 5: gespritzte Formteile
- 6: zweite Matrize
- 7: Fasermatte
- 8: Noppen (Rillen)
- 9: Funktionsfläche

## Patentansprüche

1. Verfahren zur Herstellung von faserverstärkten, Anbauelemente umfassenden Innenverkleidungsbauteilen für Kraftfahrzeuge mit den Schritten:
- Spritzen der Anbauelemente (5) in einem einen Kern (2) und eine erste Matrize (1) umfassenden Werkzeug unter Verwendung eines thermoplastischen oder duroplastischen Kunststoffs und
- Überpressen der gespritzten Anbauelemente (5) mit einer Fasermatte (7) unter Verwendung einer zweiten Matrize (6),
**dadurch gekennzeichnet, dass** die Herstellung in einem kombinierten Spritz- und Presswerkzeug erfolgt, wobei die im ersten Schritt unter Einsatz der ersten Matrize (1) gespritzten Anbauelemente (5) im Werkzeugkern (2) verbleiben und anschließend unter Einsatz der zweiten Matrize (6) mit einer Fasermatte (7) überpresst werden.

2. Verfahren nach Anspruch 1,
**dadurch gekennzeichnet, dass** die Anbauelemente (5) Funktionselemente, Funktionsbereiche und/oder Verstärkungen sind.

3. Verfahren nach Anspruch 1 oder 2,
**dadurch gekennzeichnet, dass** die im ersten Schritt gespritzten Anbauelemente (5) zumindest teilweise vor dem Überpressen mit der Fasermatte (7) abgekühlt werden.

4. Verfahren nach einem der Ansprüche 1 bis 3,
**dadurch gekennzeichnet, dass** das Überpressen mit der Fasermatte (7) vor dem vollständigen Erstarren der Anbauelemente (5) erfolgt.

5. Verfahren nach einem der Ansprüche 1 bis 4,
**dadurch gekennzeichnet, dass** das Überpressen bei einer Temperatur zwischen 100 °C und 230 °C erfolgt.

6. Verfahren nach einem der Ansprüche 1 bis 5,
**dadurch gekennzeichnet, dass** die Anbauelemente (5) mit einer Haltemittel umfassenden Funktionsoberfläche gefertigt werden, um die Verbindungsbildung mit der Fasermatte (7) zu verbessern.

7. Verfahren nach Anspruch 6,
**dadurch gekennzeichnet, dass** die Haltemittel Rillen oder Noppen sind.

8. Verfahren nach einem der Ansprüche 1 bis 7,
**dadurch gekennzeichnet, dass** als Fasermatten (7) naturfaserhaltige Matten eingesetzt werden.

9. Verfahren nach einem der Ansprüche 1 bis 8,
**dadurch gekennzeichnet, dass** der Kern (2) mit Kernschiebern (3) kombiniert wird, um Teilbereiche der in dem Werkzeugkern (2) für die Anbauelemente (5) vorgegebenen Kavität (4) von der Kunststoffschmelze freizuhalten.

## Claims

1. Method for producing fibre-reinforced internal panelling components containing attachment elements for motor vehicles, with the steps:
- injection-moulding the attachment elements (5) in a tool comprising a core (2) and a first die (1) by means of a thermoplastic or duroplastic synthetic material, and
- over-pressing a fibre matting (7) over the injection-moulded attachment elements (5) by means of a second die (6),
**characterised in that** production takes place in a combined injection-moulding and pressing tool, wherein the attachment elements (5) which were injection-moulded in the first step by means of the first die (1) remain in the tool core (2) and are then over-pressed with a fibre matting (7) by means of the second die (6).

2. Method according to claim 1, **characterised in that** the attachment elements (5) are function elements, function regions and/or reinforcements.

3. Method according to claim 1 or 2, **characterised in that** the attachment elements (5) which were injection-moulded in the first step are cooled at least partially before being over-pressed with the fibre matting (7).

4. Method according to any of claims 1 to 3, **characterised in that** the fibre matting (7) is over-pressed over the attachment elements (5) before the latter are completely set.

5. Method according to any of claims 1 to 4, **characterised in that** the over-pressing takes place at a temperature between 100°C and 230°C.

6. Method according to any of claims 1 to 5, **characterised in that** the attachment elements (5) are produced with a function surface comprising a retaining means in order to improve the formation of a connection to the fibre matting (7).

7. Method according to claim 6, **characterised in that** the retaining means are grooves or studs.

8. Method according to any of claims 1 to 7, **characterised in that** matting containing natural fibres is used as the fibre matting (7).

9. Method according to any of claims 1 to 8, **characterised in that** the core (2) is combined with core slides (3) in order to leave partial regions of the cavity (4) predefined in the tool core (2) for the attachment elements (5) free from plastic melt.

## Revendications

1. Procédé d'obtention de composants de revêtement interne comprenant des éléments de montage renforcés par des fibres destinés à des véhicules comprenant des étapes consistant à :
- injecter les éléments de montage (5) dans un outil comprenant un noyau (2) et une première matrice (1) en utilisant un matériau synthétique thermoplastique ou thermodurcissable, et
- appliquer à force sur les éléments de montage injectés (5) une nappe de fibres (7) en utilisant une seconde matrice (6),
**caractérisé en ce que**
la fabrication est effectuée dans un outil combiné d'injection et de compression, les éléments de montage (5) injectés lors de la première étape en mettant en œuvre la première matrice (1) restant dans le noyau (2) de l'outil puis, une nappe de fibres (7) étant appliquée à force sur ceux-ci en utilisant la seconde matrice (6).

2. Procédé conforme à la revendication 1,
**caractérisé en ce que**
les éléments de montage (5) sont des éléments fonctionnels, des zones fonctionnelles et/ou des renforts.

3. Procédé conforme à la revendication 1 ou 2,
**caractérisé en ce que**
les éléments de montage (5) injectés lors de la première étape sont au moins partiellement refroidis avant l'application à force de la nappe de fibres (7).

4. Procédé conforme à l'une des revendications 1 à 3,
**caractérisé en ce que**
l'application à force de la nappe de fibres (7) est effectuée avant le durcissement complet des éléments de montage (5).

5. Procédé conforme à l'une des revendications 1 à 4,
**caractérisé en ce que**
l'application à force est effectuée à une température comprise entre 100°C et 230°C.

6. Procédé conforme à l'une des revendications 1 à 5,
**caractérisé en ce que**
les éléments de montage (5) sont fabriqués avec des surfaces fonctionnelles comprenant des moyens de retenue permettant d'améliorer la liaison avec la nappe de fibres (7).

7. Procédé conforme à la revendication 6,
**caractérisé en ce que**
les moyens de retenue sont des rainures ou des boucles.

8. Procédé conforme à l'une des revendications 1 à 7,
**caractérisé en ce qu'**
en tant que nappe de fibres (7) on utilise des nappes renfermant des fibres naturelles.

9. Procédé conforme à l'une des revendications 1 à 8,
**caractérisé en ce que**
le noyau (2) est combiné à des coulisseaux de noyau (3) pour permettre de libérer des zones partielles de la cavité (4) destinée aux éléments de montage (5) de la masse fondue de matériau synthétique.
